# EUROPÄISCHE PATENTSCHRIFT

(11) **EP 2 676 524 B1**
(45) Veröffentlichungstag und Bekanntmachung des Hinweises auf die Patenterteilung: **02.11.2016**
(21) Anmeldenummer: 12707498.7
(22) Anmeldetag: 08.02.2012
(51) Int. Cl.: H05B 3/84

(54) **TRANSPARENTE SCHEIBE MIT ELEKTRISCHER HEIZSCHICHT, SOWIE HERSTELLUNGSVERFAHREN HIERFÜR**
TRANSPARENT PANE WITH AN ELECTRICAL HEATING LAYER AND PRODUCTION PROCESS THEREFOR
VITRE TRANSPARENTE DOTÉE D'UNE COUCHE CHAUFFANTE ÉLECTRIQUE ET PROCÉDÉ DE FABRICATION ASSOCIÉ

(30) Priorität: 16.02.2011 EP 11154735
(43) Veröffentlichungstag der Anmeldung: 25.12.2013
(73) Patentinhaber: Saint-Gobain Glass France, 92400 Courbevoie (FR)
(72) Erfinder: REUL, Bernhard, 52134 Herzogenrath (DE); LISINSKI, Susanne, 50739 Köln (DE); SCHALL, Günther, 52372 Kreuzau (DE); VELDEN, Sabine, 52459 Inden (DE)
(74) Vertreter: Gebauer, Dieter Edmund
(86) Internationale Anmeldenummer: PCT/EP2012/052141
(87) Internationale Veröffentlichungsnummer: WO 2012/110381

(56) Entgegenhaltungen:
- EP-A2- 0 155 614
- EP-A2- 0 524 537
- DE-A1- 10 136 549
- DE-A1-102007 008 833

## Beschreibung

Die Erfindung liegt auf dem Gebiet der Scheibentechnik und betrifft eine transparente Scheibe mit einer elektrischen Heizschicht, sowie ein Verfahren zu deren Herstellung.

Transparente Scheiben mit einer elektrischen Heizschicht sind als solche wohlbekannt und bereits vielfach in der Patentliteratur beschrieben worden. Lediglich beispielhaft sei diesbezüglich auf die deutschen Offenlegungsschriften DE 10200705286, DE 102008018147 A1 und DE 102008029986 A1 verwiesen. In Kraftfahrzeugen werden sie häufig als Windschutzscheiben eingesetzt, da das zentrale Sichtfeld aufgrund gesetzlicher Vorgaben keine wesentlichen Sichteinschränkungen aufweisen darf. Durch die von der Heizschicht erzeugte Wärme können binnen kurzer Zeit kondensierte Feuchtigkeit, Eis und Schnee entfernt werden.

Der Heizstrom wird in der Regel durch mindestens ein Paar streifen- bzw. bandförmiger Elektroden in die Heizschicht eingeleitet. Diese sollen als Sammelleiter den Heizstrom möglichst gleichmäßig in die Heizschicht einleiten und auf breiter Front verteilen. Der elektrische Flächenwiderstand der Heizschicht ist bei den zurzeit in der industriellen Serienfertigung eingesetzten Materialien relativ hoch und kann in der Größenordnung von einigen Ohm pro Flächeneinheit liegen. Um dennoch eine für die praktische Anwendung genügende Heizleistung zu erzielen, muss die Speisespannung entsprechend hoch sein, wobei aber beispielsweise in Kraftfahrzeugen standardmäßig nur eine Bordspannung von 12 bis 24 Volt zur Verfügung steht. Da der Flächenwiderstand der Heizschicht mit der Länge der Strompfade des Heizstroms zunimmt, sollten die Sammelleiter gegensätzlicher Polarität einen möglichst geringen Abstand voneinander haben. Bei Fahrzeugscheiben, die gewöhnlich breiter als hoch sind, werden die Sammelleiter deshalb entlang der beiden längeren Scheibenränder angeordnet, so dass der Heizstrom über den kürzeren Weg der Scheibenhöhe fließen kann. Diese Gestaltung hat jedoch zur Folge, dass der Bereich einer Ruhe- oder Parkstellung von zum Wischen der Scheibe vorgesehenen Scheibenwischern gewöhnlich außerhalb des Heizfelds liegt, so dass dort keine ausreichende Heizleistung mehr vorliegt und die Scheibenwischer festfrieren können.

Die europäische Patentanmeldung EP 0524537 A2 zeigt eine mit einer elektrischen Heizschicht versehene Windschutzscheibe nach dem Oberbegriff des Anspruch 1, bei der im Bereich einer Wischerfeldablage zwei flächige Heizstreifen als Heizelemente vorgesehen sind. Die Heizstreifen sind jeweils über einen benachbart zum unteren Scheibenrand angeordneten unteren Sammelleiter an den einen Pol sowie über einen Leitungsdraht an den anderen Pol einer Spannungsquelle elektrisch angeschlossen. Nachteilig bei dieser Anordnung ist es, dass der untere Sammelleiter zusätzlich mit dem Strom für die beiden Heizstreifen belastet wird.

Die deutsche Patentanmeldung DE 102007008833 A1 zeigt eine elektrisch heizbare Windschutzscheibe, welche im Bereich einer Wischerfeldablage zusätzlich heizbar ist. Zu diesem Zweck sind Heizdrähte vorgesehen, die an einen unteren Sammelleiter als Massenanschluss angeschlossen sind. Die Heizdrähte werden unabhängig von der Scheibenheizung im Sichtfeld mit einem Potential beaufschlagt. Auch bei dieser Anordnung wird der untere Sammelleiter zusätzlich mit dem Strom für die Heizdrähte belastet.

Demgegenüber besteht die Aufgabe der vorliegenden Erfindung darin, transparente Scheiben mit elektrischer Heizschicht in vorteilhafter Weise weiterzubilden. Diese und weitere Aufgaben werden nach dem Vorschlag der Erfindung durch eine transparente Scheibe mit den Merkmalen des unabhängigen Patentanspruchs gelöst. Vorteilhafte Ausgestaltungen der Erfindung sind durch die Merkmale der Unteransprüche angegeben.

Erfindungsgemäß ist eine transparente Scheibe mit einer elektrisch heizbaren, transparenten Schicht (im Weiteren als "Heizschicht" bezeichnet) gezeigt, die insbesondere als Windschutzscheibe eines Kraftfahrzeugs ausgebildet ist. Die Heizschicht erstreckt sich zumindest über einen wesentlichen Teil der Scheibenfläche, insbesondere über deren (zentrales) Sichtfeld, und ist durch elektrische Anschlussmittel mit einer Spannungsquelle elektrisch verbindbar. Die Anschlussmittel verfügen über Außenanschlüsse, die zum Verbinden mit den beiden Polen einer Spannungsquelle vorgesehen sind. Zudem umfassen die Anschlussmittel mindestens zwei Anschlusselektroden, die zum Einleiten eines Heizstroms in die Heizschicht dienen und mit der Heizschicht direkt elektrisch leitend so verbunden sind, dass nach Anlegen der Speisespannung ein Heizstrom über ein von der Heizschicht gebildetes Heizfeld fließt. Im Sinne vorliegender Erfindung bezieht sich der Begriff "Heizfeld" auf jenen Bereich der Heizschicht, welcher durch einen Heizstrom, der durch Anlegen einer Speisespannung an die Anschlusselektroden erzeugt wird, direkt heizbar ist.

Die Anschlusselektroden sind in Form von Streifen- bzw. Bandelektroden ("Bus bars") ausgebildet, um den Heizstrom als Sammelleiter breit verteilt in die Heizschicht einzuleiten. So sind in der erfindungsgemäßen Scheibe ein bandförmiger erster Sammelleiter und ein bandförmiger zweiter Sammelleiter vorgesehen, welche jeweils über die volle Bandlänge hinweg (d.h. über die vollständige Länge des Sammelleiters in Erstreckungsrichtung) direkt elektrisch leitend mit der Heizschicht verbunden sind. Zu diesem Zweck können die beiden bandförmigen Sammelleiter vollständig auf die Heizschicht beispielsweise durch Aufdrucken im (Sieb-)Druckverfahren aufgebracht sein, wobei es aber grundsätzlich ausreicht, wenn jeder Sammelleiter in einem sich entlang der vollen Länge des Sammelleiters erstreckenden Anschlussabschnitt auf die Heizschicht aufgebracht ist. Die Sammelleiter verfügen somit jeweils über einen Kontaktbereich, der sich über die volle Bandlänge erstreckt und die Heizschicht direkt elektrisch kontaktiert. Im Vergleich zur hochohmigen Heizschicht haben die Sammelleiter einen relativ geringen bzw. niederohmigen elektrischen Widerstand, so dass sie selbst zur elektrischen Heizung praktisch nichts beitragen. Bei der Windschutzscheibe eines Kraftfahrzeugs ist der erste Sammelleiter benachbart zum oberen Scheibenrand, der zweite Sammelleiter benachbart zum unteren Scheibenrand angeordnet, so dass sich die beiden Sammelleiter in Scheiben- bzw. Fahrzeugquerrichtung erstrecken.

Da die Sammelleiter in der erfindungsgemäßen Scheibe jeweils über ihre vollständige Erstreckung hinweg an die Heizschicht direkt elektrisch leitend angeschlossen sind, erstrecken sich die Sammelleiter ausschließlich in Scheibenquerrichtung. Somit sind an den beiden seitlichen Scheibenrändern, insbesondere in einem beschichtungsfreien oder aber mit der Heizschicht beschichteten, jedoch vom Heizfeld galvanisch getrennten Randbereich der Scheibe, keine Sammelleiter angeordnet. Durch die Tatsache, dass an den seitlichen Scheibenrändern keine Sammelleiter vorgesehen sind, kann in vorteilhafter Weise eine Erhöhung des elektrischen Widerstands der Sammelleiter und ein damit einher gehender elektrischer Leistungsverlust vermieden werden. Verfahrenstechnisch ist es vorteilhaft wenn die Sammelleiter durch (Sieb-)Druck aufgedruckt werden, wobei dadurch, dass in den seitlichen Scheibenrändern keine Sammelleiter vorgesehen sind, eine Schwächung der Scheibe durch Aufdrucken der Sammelleiter vermieden werden kann.

Die Scheibe weist als weitere Anschlussmittel Flachbandleiter (z.B. bandförmige Metallfolien) auf, welche mit den Sammelleitern in direktem Kontakt elektrisch leitend verbunden sind. So sind der erste Sammelleiter mit mindestens einem ersten Flachbandleiter und der zweite Sammelleiter mit mindestens einem zweiten Flachbandleiter direkt elektrisch leitend verbunden. Beispielsweise sind die Flachbandleiter zu diesem Zweck jeweils mit einem Anschlussabschnitt auf den jeweiligen Sammelleiter aufgebracht. Die Flachbandleiter verfügen somit jeweils über einen Kontaktbereich, der den zugehörigen Sammelleiter direkt elektrisch leitend kontaktiert.

Die erfindungsgemäße Scheibe verfügt zudem über mindestens eine heizfeldfreie Scheibenzone, die von dem durch die Sammelleiter in die Heizschicht eingeleiteten Heizstrom nicht direkt beheizt werden kann. Insbesondere kann es sich bei der heizfeldfreien Scheibenzone um eine heizschichtfreie Scheibenzone handeln, die beispielsweise durch nachträgliches Entfernen der Heizschicht oder durch Maskieren beim Aufbringen der Heizschicht ausgebildet werden kann. Alternativ ist es auch möglich, dass sich in der heizfeldfreien Scheibenzone zwar die Heizschicht befindet, wobei diese aufgrund der Anordnung der Sammelleiter jedoch nicht mit der Speisespannung beaufschlagbar und nicht vom Heizstrom durchströmbar (nicht direkt beheizbar) ist.

In der heizfeldfreien Scheibenzone ist mindestens ein elektrisch heizbares Heizelement (im Weiteren als "Zonenheizelement" bezeichnet) angeordnet, das zur Ohm'sehen Heizung dient und einen solchen ohmschen Widerstand hat, dass durch Anlegen derselben Speisespannung wie an die Heizschicht die heizfeldfreie Scheibenzone elektrisch heizbar ist. Wesentlich hierbei ist, dass das Zonenheizelement in elektrischer Parallelschaltung zum Heizfeld mit den elektrischen Anschlussmitteln der Heizschicht elektrisch verbunden ist. Das Zonenheizelement ist zu diesem Zweck mit dem mindestens einen ersten Flachbandleiter, welcher den ersten Sammelleiter in direktem Kontakt elektrisch leitend kontaktiert, und dem mindestens einen zweiten Flachbandleiter, welcher den zweiten Sammelleiter direkt elektrisch leitend kontaktiert, in direktem Kontakt elektrisch leitend verbunden. Das Zonenheizelement ist somit mit den Sammelleitern nicht direkt elektrisch leitend verbunden.

Das Zonenheizelement kann durch die Flachbandleiter mit derselben Speisespannung wie die Heizschicht versorgt werden, so dass in vorteilhafter Weise auf separate Außenanschlüsse verzichtet werden kann. Zudem kann durch die Tatsache, dass das Zonenheizelement mit den Sammelleitern nicht direkt elektrisch leitend verbunden ist, in vorteilhafter Weise vermieden werden, dass die Sammelleiter einer zusätzlichen elektrischen Belastung durch den Strom des Zonenheizelements unterliegen. Vielmehr wird der Strom für das Zonenheizelement unter Umgehung der Sammelleiter direkt von den Flachbandleitern in das Zonenheizelement eingespeist. In vorteilhafter Weise kann die Scheibe mit einem besonders hohen Wirkungsgrad beheizt werden, da der Strom für das Zonenheizelement nicht in den Sammelleitern geführt wird, so dass damit einher gehende, relativ hohe elektrische Verluste vermeidbar sind.

Ist die erfindungsgemäße Scheibe als Fahrzeug-Windschutzscheibe ausgeführt, kann es sich bei der heizfeldfreien Scheibenzone, aber nicht notwendigerweise heizschichtfreien Scheibenzone, beispielsweise um ein für elektromagnetische Signale durchlässiges Kommunikationsfenster oder um den Bereich einer Ruhe- oder Parkstellung von zum Wischen der Scheibe vorgesehenen Scheibenwischern handeln. Insbesondere im letztgenannten Fall ermöglicht die erfindungsgemäße Scheibe in besonders vorteilhafter Weise, dass eine separate elektrische Zuleitung zum Zonenheizelement nicht erforderlich ist.

In der erfindungsgemäßen Scheibe ist das Zonenheizelement durch Verbindungsabschnitte mit dem ersten und/oder zweiten Flachbandleiter direkt elektrisch leitend verbunden. Dabei kann es insbesondere in fertigungstechnischer Hinsicht von Vorteil sein, wenn die Verbindungsabschnitte zumindest bereichsweise in Berührungskontakt mit der Heizschicht, insbesondere dem Heizfeld, angeordnet sind, wobei zumindest die in Berührungskontakt mit der Heizschicht bzw. dem Heizfeld angeordneten Bereiche der Verbindungsabschnitte mit einer von der Umgebung elektrisch isolierenden Ummantelung versehen sind. Eine solche Ummantelung kann beispielsweise in Form eines Polyurethan-Lacks ausgebildet sein. Gleichermaßen ist es auch möglich, dass die Verbindungsabschnitte zumindest teilweise in einer heizschicht- oder heizfeldfreien Randzone der Scheibe angeordnet sind. Im letztgenannten Fall kann auf eine elektrisch isolierende Ummantelung der Verbindungsabschnitte verzichtet werden.

Bei einer besonders vorteilhaften Ausgestaltung der erfindungsgemäßen Scheibe ist sie als Verbundscheibe mit zwei durch eine thermoplastische Klebeschicht miteinander verbundenen Einzelscheiben ausgeführt, wobei sich die Heizschicht auf zumindest einer Oberfläche der Einzelscheiben und/oder auf einer Oberfläche eines zwischen den Einzelscheiben angeordneten Trägers befindet. Dabei ist das Zonenheizelement zwischen den beiden Einzelscheiben angeordnet und kann insbesondere zumindest abschnittsweise in die Klebeschicht eingebettet sein, um eine besonders einfache und zuverlässige Fixierung des Zonenheizelements zu erreichen. Es versteht sich, dass die beiden Einzelscheiben nicht zwangsläufig aus Glas bestehen müssen, sondern dass diese auch aus einem nicht-gläsernen Material, beispielsweise Kunststoff, bestehen können. Insbesondere kann sich das Zonenheizelement auf einer selben Seite der Verbundscheibe (beispielsweise "Seite 3") wie die Heizschicht befinden, d.h. insbesondere auch auf einer selben Seite der Klebeschicht. Alternativ wäre es gleichermaßen möglich, dass sich das Zonenheizelement und die Heizschicht auf verschiedenen Seiten der Klebeschicht befinden.

Bei einer weiteren vorteilhaften Ausgestaltung der erfindungsgemäßen Scheibe ist das wenigstens eine Zonenheizelement in Form eines beispielsweise metallischen Heizdrahts oder Heizfolie ausgebildet, was eine besonders einfache und kostengünstige technische Realisierung ermöglicht. Vorzugsweise hat der Heizdraht einen Durchmesser im Bereich von 35 bis 150 µm und ist so ausgebildet, dass er einen Ohm'sehen Widerstand im Bereich von 0,1 bis 1 Ohm/m hat, so dass insbesondere bei einer Speisespannung im Bereich von 12 bis 24 Volt eine gewünschte Heizleistung erzielt werden kann. Vorzugsweise ist der Heizdraht dabei so ausgebildet, dass er beispielsweise bei einer Speisespannung im Bereich von 12 bis 24 Volt eine Heizleistung im Bereich von 300 bis 1000 W/m² Scheibenfläche zur Verfügung stellen kann. Für den Fall, dass der Heizdraht zumindest einen gekrümmten Drahtabschnitt aufweist, ist es bevorzugt, wenn der gekrümmte Drahtabschnitt einen Krümmungsradius von mehr als 4 mm aufweist, so dass die praktische Handhabbarkeit beim Verlegen verbessert und die Bruchgefahr verringert ist.

In der industriellen Serienfertigung kann ein als Heizdraht ausgeführtes Zonenheizelement in technisch besonders einfacher und kostengünstiger Weise verlegt werden. Zu diesem Zweck kann beispielsweise ein im Wesentlichen in einer Ebene verfahrbarer Führungskopf für den Heizdraht eingesetzt werden, welcher mit einer erwärmten Pressrolle so gekoppelt ist, dass der Heizdraht in die Klebschicht zum Verkleben der beiden Einzelscheiben einer Verbundscheibe eingepresst wird. Durch die erwärmte Pressrolle kann ein lokales Erweichen der Klebschicht erreicht werden.

Bei einer Ausgestaltung der erfindungsgemäßen Scheibe als Fahrzeug-Windschutzscheibe ist es vorteilhaft, wenn das Zonenheizelement in Überdeckung zu einem benachbart zu einem unteren Scheibenrand angeordneten Sammelleiter angeordnet ist. Durch diese Maßnahme kann in vorteilhafter Weise ein Beheizen der Scheibe auch im Bereich des unteren Sammelleiters erreicht werden. Der untere Sammelleiter hat in der Regel nur eine sehr geringe ohmsche Heizleistung und liegt außerhalb des Heizfelds. Somit kann auch in diesem streifenförmigen Bereich der Scheibe eine Eis- oder Schneeschicht zuverlässig und sicher entfernt werden.

Die Erfindung erstreckt sich weiterhin auf ein Verfahren zur Herstellung einer transparenten Scheibe mit einer elektrischen Heizschicht, die sich zumindest über einen wesentlichen Teil der Scheibenfläche erstreckt und durch elektrische Anschlussmittel mit einer Spannungsquelle elektrisch verbindbar ist, wobei die Anschlussmittel einen bandförmigen ersten Sammelleiter und einen bandförmigen zweiten Sammelleiter umfassen, die jeweils über die vollständige Bandlänge hinweg mit der Heizschicht direkt elektrisch leitend so verbunden sind, dass nach Anlegen einer Speisespannung ein Heizstrom über ein von der Heizschicht gebildetes Heizfeld fließt, wobei der erste Sammelleiter mit mindestens einem ersten Flachbandleiter und der zweite Sammelleiter mit mindestens einem zweiten Flachbandleiter direkt elektrisch leitend verbunden sind, und wobei die Scheibe mindestens eine heizfeldfreie Scheibenzone aufweist. In dem Verfahren wird mindestens ein elektrisches Zonenheizelement, das einen solchen Ohm'sehen Widerstand hat, dass durch Anlegen der Speisespannung die heizfeldfreie Scheibenzone heizbar ist, in der heizfeldfreien Scheibenzone angeordnet und das Zonenheizelement in elektrischer Parallelschaltung zum Heizfeld mit dem mindestens einen ersten Flachbandleiter und dem mindestens einen zweiten Flachbandleiter direkt elektrisch leitend verbunden. Bei einer vorteilhaften Ausgestaltung des Verfahrens wird das Zonenheizelement zumindest abschnittsweise in Berührungskontakt mit, aber elektrisch isoliert gegen, die Heizschicht angeordnet. Verfahrenstechnisch vorteilhaft ist es, wenn das Zonenheizelement in Form eines einstückigen Heizdrahts verlegt wird.

Des Weiteren erstreckt sich die Erfindung auf die Verwendung einer wie oben beschriebenen transparenten Scheibe als funktionales Einzelstück und als Einbauteil in Möbeln, Geräten und Gebäuden, sowie in Fortbewegungsmitteln zur Fortbewegung auf dem Lande, in der Luft oder zu Wasser, insbesondere in Kraftfahrzeugen beispielsweise als Windschutzscheibe, Heckscheibe, Seitenscheibe und/oder Glasdach.

Es versteht sich, dass die verschiedenen Ausgestaltungen einzeln oder in beliebigen Kombinationen realisiert sein können. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

### Kurze Beschreibung der Zeichnungen

Die Erfindung wird nun anhand eines Ausführungsbeispiels näher erläutert, wobei Bezug auf die beigefügte Figur genommen wird. Diese zeigt in vereinfachter, nicht maßstäblicher Darstellung eine schematische Ansicht eines Ausführungsbeispiels der erfindungsgemäßen Scheibe in einer Ausgestaltung als Fahrzeug-Windschutzscheibe.

### Ausführliche Beschreibung der Zeichnungen

In der beigefügten Figur ist die erfindungsgemäße Scheibe beispielhaft in Form einer insgesamt mit der Bezugszahl 1 bezeichneten Fahrzeug-Windschutzscheibe verkörpert. Die Windschutzscheibe 1 ist als Verbundscheibe ausgebildet, die (wie der eingefügten Querschnittsdarstellung entnommen werden kann) eine starre Außenscheibe 2 und eine starre Innenscheibe 3 umfasst, die beide als Einzelscheiben ausgebildet und über eine thermoplastische Klebeschicht 4, hier beispielsweise eine Polyvinylbutyralfolie (PVB), Ethylen-Vinyl-Acetat-Folie (EVA) oder Polyurethanfolie (PU), miteinander verbunden sind. Dem Fachmann ist der grundsätzliche Aufbau einer solchen Verbundscheibe beispielsweise aus der industriellen Serienfertigung von Kraftfahrzeugen wohlbekannt, so dass hier nicht näher darauf eingegangen werden muss. Die beiden Einzelscheiben 2, 3 sind annähernd von gleicher Größe, haben in etwa eine trapezförmig geschwungene Kontur und sind beispielsweise aus Glas gefertigt, wobei sie gleichermaßen aus einem nichtgläsernen Material wie Kunststoff hergestellt sein können. Für eine andere Anwendung wie als Windschutzscheibe ist es auch möglich, die beiden Einzelscheiben 2, 3 aus einem flexiblen Material herzustellen.

Die Kontur der Windschutzscheibe 1 ist durch einen Scheibenrand 5 definiert, der sich entsprechend der trapezartigen Form aus zwei langen Scheibenrändern 5a, 5a' (in Einbaulage oben und unten) und zwei kurzen Scheibenränder 5b, 5b' (in Einbaulage links und rechts) zusammensetzt. Auf der mit der Klebeschicht 4 verbundenen Seite der Innenscheibe 3 ("Seite 3") ist eine transparente, für eine elektrische Beheizung der Windschutzscheibe 1 dienende Heizschicht 6 abgeschieden. Die Heizschicht 6 ist im Wesentlichen vollflächig auf die Innenscheibe 3 aufgebracht, wobei ein allseitig umlaufender Randstreifen 7 der Innenscheibe 3 nicht beschichtet ist, so dass ein Heizschichtrand 8 gegenüber dem Scheibenrand 5 nach innen rückversetzt ist. Diese Maßnahme dient einer elektrischen Isolierung der Heizschicht 6 nach außen. Zudem wird die Heizschicht 6 gegen vom Scheibenrand 5 vordringende Korrosion geschützt.

In an sich bekannter Weise umfasst die Heizschicht 6 eine Schichtenfolge mit mindestens einer elektrisch leitfähigen metallischen Teilschicht, vorzugsweise Silber, und gegebenenfalls weiteren Teilschichten wie Entspiegelungs- und Blockerschichten. Vorteilhaft ist die Schichtenfolge thermisch hoch belastbar, so dass sie die zum Biegen von Glasscheiben erforderlichen hohen Temperaturen von typischer Weise mehr als 600°C ohne Schädigung übersteht, wobei aber auch thermisch gering belastbare Schichtenfolgen vorgesehen sein können. Anstatt direkt auf die Innenscheibe 3 aufgebracht zu sein, könnte sie beispielsweise auch auf eine Kunststofffolie aufgebracht werden, die anschließend mit der Außen- und Innenscheibe 2, 3 verklebt wird. Die Heizschicht 6 wird beispielsweise durch Sputtern (Magnetron-Kathodenzerstäubung) aufgebracht. Der Flächenwiderstand der Heizschicht 6 liegt beispielsweise im Bereich von 0,1 bis 6 Ohm/Flächeneinheit.

Die Heizschicht 6 ist mit einem (oberen) ersten Sammelleiter 10 und einem (unteren) zweiten Sammelleiter 11 direkt elektrisch leitend verbunden. Die beiden Sammelleiter 10, 11 sind jeweils band- bzw. streifenförmig ausgebildet und dienen als Anschlusselektroden zum breiten Einleiten eines Speisestroms in die Heizschicht 6. Zu diesem Zweck sind die Sammelleiter 10, 11 auf der Heizschicht 6 angeordnet, wobei sich der erste Sammelleiter 10 entlang des oberen langen Scheibenrands 5a und der zweite Sammelleiter 11 entlang des unteren langen Scheibenrands 5a' erstreckt. Die beiden Sammelleiter 10, 11 sind somit entlang ihrer vollen Bandlänge direkt elektrisch leitend mit der Heizschicht 6 verbunden und kontaktieren die Heizschicht 6 jeweils in einem auf ihrer Unterseite befindlichen Kontaktbereich. Die beiden Sammelleiter 10, 11 erstrecken sich ausschließlich entlang der langen Scheibenränder 5a, 5a', jedoch nicht entlang der kurzen Scheibenränder 5b, 5b'. Die beiden Sammelleiter 10, 11 bestehen aus einem gleichen Material und können beispielsweise durch Aufdrucken einer Paste auf die Heizschicht 6 beispielsweise im Siebdruckverfahren hergestellt werden. Alternativ wäre es aber auch möglich, die Sammelleiter 10, 11 aus schmalen Metallfolienstreifen beispielsweise aus Kupfer oder Aluminium herzustellen. Diese können beispielsweise auf der Klebeschicht 4 fixiert und beim Verbinden von Außen- und Innenscheibe 2, 3 auf der Heizschicht 6 angeordnet werden. Dabei kann durch die Einwirkung von Wärme und Druck beim Verbinden der Einzelscheiben ein elektrischer Kontakt gewährleistet werden. Lediglich ergänzend sei darauf hingewiesen, dass die oberste Lage der Heizschicht 6 aus einem elektrisch isolierenden Material bestehen kann. Werden die Sammelleiter 10, 11 aufgedruckt, so kann beispielsweise durch Glasfritten in der Druckpaste ein Anätzen der Heizschicht 6 für eine elektrische Kontaktierung erreicht werden. Werden die Sammelleiter 10, 11 als Metallfolienstreifen aufgebracht, kann beispielsweise durch einen Lötkolben die oberste Lage aus isolierendem Material der Heizschicht 6 lokal entfernt werden.

An den ersten Sammelleiter 10 ist ein erster Anschlussleiter 12 in direktem Kontakt elektrisch leitend angeschlossen, der als Flachbandleiter (z. B. schmale Metallfolie) ausgebildet ist, und über einen ersten Außenanschluss 20 verfügt, der zur Verbindung mit den einen Pol (beispielsweise Minuspol) einer Spannungsquelle zum Bereitstellen einer Speisespannung vorgesehen ist. Der erste Anschlussleiter 12 ist in etwa mittig des oberen langen Scheibenrands 5a senkrecht zum ersten Sammelleiter 10 angeordnet. An den zweiten Sammelleiter 11 sind zwei zweite Anschlussleiter 13, 13' in direktem Kontakt elektrisch leitend angeschlossen, die ebenfalls jeweils als Flachbandleiter (z.B. schmale Metallfolien) ausgebildet sind und jeweils über einen zweiten Außenanschluss 21, 21' verfügen, die zur Verbindung mit dem anderen Pol (beispielsweise Pluspol) der Spannungsquelle vorgesehen sind. Die beiden zweiten Anschlussleiter 13, 13' sind mit einem Zwischenabstand beiderseits eines Mittenbereichs 16 einer weiter unten erläuterten heizfeldfreien Zone 9 senkrecht zum zweiten Sammelleiter 11 angeordnet. Die Anschlussleiter 12, 13, 13' kontaktieren den zugehörigen Sammelleiter 10, 11 jeweils in einem auf ihrer Unterseite befindlichen Kontaktbereich.

Durch die beiden Sammelleiter 10, 11 wird ein Heizfeld 14 eingeschlossen, in dem bei Anlegen einer Speisespannung ein Heizstrom fließt. Aufgrund eines im Vergleich zur Heizschicht 6 vernachlässigbaren Ohm'sehen Widerstands heizen sich die Sammelleiter 10, 11 dabei praktisch nicht auf und leisten keinen nennenswerten Beitrag zur Heizleistung.

Wie eingangs bereits erläutert wurde, nimmt der Flächenwiderstand der Heizschicht 6 mit der Länge des Strompfads des Heizstroms zu, so dass es im Hinblick auf eine zufrieden stellende Heizleistung vorteilhaft ist, wenn die beiden Sammelleiter 10, 11 einen möglichst geringen Abstand voneinander haben. Aus diesem Grund bietet es sich an, einen unteren Scheibenbereich, der nicht mehr zum Sichtfeld gehört, jedoch dem Bereich einer Ruhe- oder Parkstellung von zum Wischen der Scheibe vorgesehenen Scheibenwischern entspricht, als heizfeldfreie Zone 9 auszubilden. Gleichwohl befindet sich in der heizfeldfreie Zone 9 die Heizschicht 6, welche sich allerdings nicht zwischen den beiden Sammelleitern 10, 11 befindet, nicht vom Heizstrom durchströmt werden kann und somit nicht direkt beheizbar ist.

Um die heizfeldfreie Zone 9 zu heizen, verfügt diese über einen Heizdraht 15, der als elektrisch beheizbares Zonenheizelement dient. Der Heizdraht 15 ist von einer elektrisch isolierenden Ummantelung, beispielsweise ein Polyurethan-Lack, umgeben. Dabei formt der Heizdraht 15 zwei Heizzonen 17, 17' die sich beiderseits des Mittenbereichs 16 befinden und durch einen mäandrisch geschwungenen Verlauf des Heizdrahts 15 definiert sind. Der mäandrisch geschwungene Verlauf des Heizdrahts 15 dient für eine zumindest annähernd flächige Heizung der heizfeldfreien Zone 9. Ein erstes Drahtende 18 des Heizdrahts 15 ist an den einen (in der Figur linken) zweiten Anschlussleiter 13 in direktem Kontakt elektrisch leitend angeschlossen, während sein zweites Drahtende 19 an den anderen (in der Figur rechten) zweiten Anschlussleiter 13' in direktem Kontakt elektrisch leitend angeschlossen ist. Konkret hat der Heizdraht 15, ausgehend von seinem ersten Drahtende 18 in der einen Heizzone 17, einen mäandrisch geschwungenen Verlauf, ohne dabei den Mittenbereich 16 zu queren, wobei er dabei in etwa über die halbe Sammelleiterlänge oberhalb bzw. auf dem unteren bzw. zweiten Sammelleiter 11 angeordnet ist, erstreckt sich anschließend im heizschichtfreien Randstreifen 7 entlang des linken kurzen Scheibenrands 5b, erstreckt sich im Weiteren über die vollständige Sammelleiterlänge oberhalb bzw. auf dem oberen bzw. ersten Sammelleiter 10 entlang des oberen langen Scheibenrands 5a und erstreckt sich im heizschichtfreien Randstreifen 7 entlang des rechten kurzen Scheibenrands 5b', um dann in der anderen Heizzone 17' wiederum einen mäandrisch geschwungenen Verlauf anzunehmen, ohne dabei den Mittenbereich 16 zu queren, wobei er sich dabei in etwa über die halbe Sammelleiterlänge oberhalb bzw. auf dem unteren bzw. zweiten Sammelleiter 11 erstreckt, und endet schließlich im zweiten Drahtende 19. Hierbei hat der Heizdraht 15 am oberen langen Scheibenrand 5a in einem Kontaktfleck einen direkten elektrischen Kontakt mit dem ersten Anschlussleiter 12, jedoch aufgrund der elektrischen Ummantelung keinen direkten elektrischen Kontakt mit dem ersten Sammelleiter 10. Für einen direkten elektrischen Kontakt zwischen Heizdraht 15 und erstem Anschlussleiter 12 in einem ersten Kontaktfleck 24 ist die elektrisch isolierende Ummantelung des Heizdrahts 15 im Bereich des ersten Anschlussleiters 12 lokal entfernt, was in der Serienfertigung beispielsweise durch Ansetzen eines Lötkolbens zum Entfernen der Lackschicht erreicht werden kann. In entsprechender Weise ist die elektrische Ummantelung des Heizdrahts 15 an den beiden zweiten Anschlussleitern 13, 13' zur Formung eines jeweiligen zweiten Kontaktflecks 25 entfernt. Ansonsten ist der Heizdraht 15 vollständig von einer isolierenden Lackschicht umgeben.

Somit dienen außerhalb der beiden Heizzonen 17, 17' befindliche Verbindungsabschnitte 23 des Heizdrahts 15 zur elektrischen Verbindung mit dem ersten Anschlussleiter 12. Durch Anlegen einer Speisespannung an die beiden Sammelleiter 10, 11 können somit gleichzeitig das Heizfeld 14 und der Heizdraht 15 beheizt werden, wobei die Sammelleiter 10, 11 nicht mit dem Strom des Heizdrahts 15 belastet werden. Vielmehr wird der Strom beispielsweise vom ersten Anschlussleiter 12 direkt in den Heizdraht 15 eingeleitet, verteilt sich dort auf zwei parallele Strompfade im Heizdraht 15, und wird an den beiden zweiten Anschlussleitern 13, 13' wieder ausgeleitet. Somit werden die beiden Sammelleiter 10, 11 nicht durch den Heizstrom für den Heizdraht 15 belastet, so dass zusätzliche elektrische Verluste in vorteilhafter Weise vermieden werden können.

Der Heizdraht 15 besteht vorzugsweise, jedoch nicht zwingend, aus einem metallischen Material, insbesondere Kupfer oder Wolfram. Der Heizdraht 15 hat beispielsweise einen Durchmesser im Bereich von 35 bis 150 µm, so dass er einen Ohm'sehen Widerstand im Bereich von 0,1 Ohm bis 1 Ohm/m hat, der bei der üblichen Bordspannung eines Kraftfahrzeugs von 12 bis 24 Volt eine für die praktische Anwendung geeignete Heizleistung hat. Vorzugsweise kann eine Heizleistung im Bereich von 300 bis 1000 W/m² Scheibenfläche zur Verfügung gestellt werden. In den gekrümmten Abschnitten ist es bevorzugt, wenn der Heizdraht 15 einen minimalen Krümmungsradius von 4 mm hat, wodurch eine einfache Verlegung erreicht werden kann.

Obgleich dies in der Figur nicht dargestellt ist, wäre es gleichermaßen möglich, dass der Heizdraht 15 außerhalb der beiden Heizzonen 17, 17' zumindest abschnittsweise auf der Heizschicht 6 in Berührungskontakt mit dieser verläuft. Der Heizdraht 15 ist hier beispielsweise auf derselben Seite der Klebeschicht 4 wie die Heizschicht 6 angeordnet, könnte jedoch auch auf der anderen Seite der Klebeschicht 4 angeordnet sein. Ebenso wäre es möglich, dass der Heizdraht 15 nur eine einzige Heizzone ausbildet, indem sich der mäandrisch geschwungene Verlauf über den Mittenbereich 16 hinweg erstreckt oder in zwei elektrisch getrennte Abschnitte unterteilt ist. Der einstückige bzw. einteilige Heizdraht 15 formt eine durchgehende Leiterschleife, wodurch verfahrenstechnisch eine besonders einfache und kostengünstige Verlegung des Drahts ermöglicht ist. Anstelle von zwei zweiten Anschlussleitern 13, 13' könnte gleichermaßen lediglich ein einziger zweiter Anschlussleiter vorgesehen sein, der beispielsweise mittig des zweiten Sammelleiters 11 angeordnet ist.

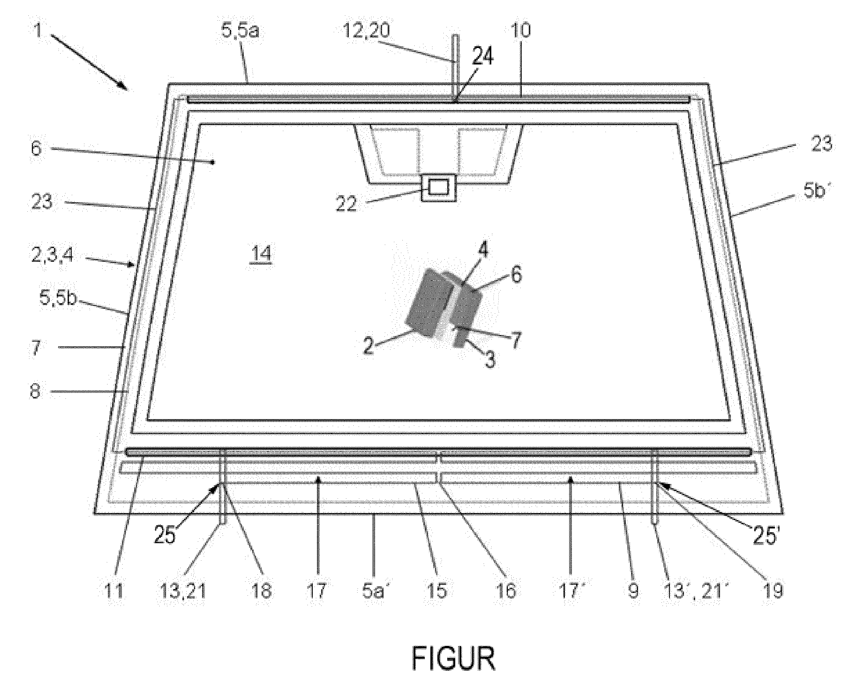

Wie in Fig. 1 dargestellt, umfasst die Windschutzscheibe weiterhin ein Kommunikationsfenster 22, das als weitere heizfeldfreie Zone 9 ausgebildet ist. Das Kommunikationsfenster 22 dient zur Kommunikation mit der äußeren Umgebung und ist zu diesem Zweck für elektromagnetische Wellen durchlässig. Die genaue Funktion des Kommunikationsfensters 22 ist für das Verständnis der Erfindung ohne Belang, so dass hier nicht näher darauf eingegangen werden muss. Es versteht sich, dass im Kommunikationsfenster 22 in entsprechender Weise ein Heizdraht angeordnet sein kann, der mit den Anschlussleitern 12, 13, 13' der Heizschicht 6 in direktem Kontakt elektrisch leitend verbunden ist, um das Kommunikationsfenster direkt zu beheizen.

In der Figur ist das Zonenheizelement beispielhaft in Form eines Heizdrahts 15 verkörpert, wobei es gleichermaßen möglich wäre, das Zonenheizelement aus einem schmalen Metallfolienstreifen zu fertigen, der beispielsweise auf der Klebeschicht 4 fixiert werden kann.

Im Folgenden wird ein beispielhaftes Herstellungsverfahren der Windschutzscheibe 1 in ihren wesentlichen Schritten beschrieben:
Zunächst werden Außen- und Innenscheibe 2, 3 in der gewünschten trapezförmigen Kontur aus einem Glasrohling geschnitten. Anschließend wird die Innenscheibe 3 mit der Heizschicht 6 durch Sputtern beschichtet, wobei der Randstreifen 7 durch Einsatz einer Maske nicht beschichtet wird. Es wäre auch möglich, dass der als Ruhe- oder Parkstellung für die Scheibenwischer dienende untere Scheibenbereich nicht beschichtet wird. Alternativ wäre es auch möglich, dass zunächst ein Rohling beschichtet wird, aus dem dann die Innenscheibe 3 geschnitten wird. Die auf diese Weise vorbehandelte Innenscheibe 3 wird zur Formung des Kommunikationsfensters 22 entschichtet, was in der industriellen Serienfertigung beispielsweise mittels eines mechanisch abtragenden Schleifrads erfolgen kann. Alternativ könnten auch der Randbereich 7 und ggf. der als Ruhe- oder Parkstellung für die Scheibenwischer dienende untere Scheibenbereich durch Entschichten hergestellt werden. Anschlieβend werden die beiden Sammelleiter 10, 11 beispielsweise im Siebdruckverfahren auf die Innenscheibe 3 aufgedruckt. Als Druckpaste kann beispielsweise eine Silberdruckpaste verwendet werden. Anschließend wird die Druckpaste voreingebrannt, gefolgt von einem Biegen der Scheiben 2, 3 bei hoher Temperatur, sowie einem Aufkleben und Verlöten der Anschlussleiter, sowie einem Zusammenlegen von Außen- und Innenscheibe 2, 3 und Verkleben mittels der Klebeschicht 4.

Vor dem Zusammenlegen von Außen- und Innenscheibe 2, 3 kann der Heizdraht 15 beispielsweise mittels eines Applikationskopfes eines Eindrückwerkzeugs in die Klebeschicht 4 eingedrückt werden, wobei der Heizdraht 15 insbesondere erwärmt werden kann, um aufgrund eines vergleichsweise niedrigen Schmelzpunkts von beispielsweise PVB in einfacher Weise eine thermische Fixierung in der Klebeschicht 4 zu bewirken. Alternativ wäre es auch möglich, eine Nut für den Heizdraht 15 in der Klebeschicht 4 vorzusehen und diesen einzulegen. Der Heizdraht 15 ist zu diesem Zweck praktischer Weise auf eine Spule aufgerollt, so dass er durch Abrollen sukzessiv zugeführt werden kann. Eine elektrische Verbindung mit den ersten und zweiten Anschlussleitern 12, 13, 13' kann beispielsweise durch Löten oder Fixieren mittels eines leitfähigen Klebstoffs beispielsweise im Ultraschallschweißverfahren erfolgen. Für den Fall, dass der Heizdraht 15 mit einer isolierenden Lackschicht ummantelt ist, kann eine elektrische Verbindung mit den Anschlussleitern 12, 13, 13' in einfacher Weise durch einen Lötkolben erfolgen, wobei die Lackschicht durch die dabei wirkenden hohen Temperaturen entfernt wird.

Die Erfindung stellt eine transparente Scheibe mit elektrischer Heizschicht zur Verfügung, bei der in zumindest einer heizfeldfreien Scheibenzone zumindest ein Zonenheizelement angeordnet ist, das an die mit den Sammelleitern elektrisch verbundenen Folienleiter angeschlossen ist. Auf separate Außenanschlüsse für das Zonenheizelement kann in vorteilhafter Weise verzichtet werden.

### Bezugszeichenliste

1 Windschutzscheibe
2 Außenscheibe
3 Innenscheibe
4 Klebeschicht
5 Scheibenrand
5a, 5a' langer Scheibenrand
5b, 5b' kurzer Scheibenrand
6 Heizschicht
7 Randstreifen
8 Heizschichtrand
9 heizfeldfreie Zone
10 erster Sammelleiter
11 zweiter Sammelleiter
12 erster Anschlussleiter
13, 13' zweiter Anschlussleiter
14 Heizfeld
15 Heizdraht
16 Mittenbereich
17, 17' Heizzone
18 erstes Drahtende
19 zweites Drahtende
20' erster Außenanschluss
21, 21' zweiter Außenanschluss
22 Kommunikationsfenster
23 Verbindungsabschnitt
24 erster Kontaktfleck
25, 25' zweiter Kontaktfleck

## Patentansprüche

1. Transparente Scheibe (1) mit einer elektrischen Heizschicht (6), die sich zumindest über einen Teil der Scheibenfläche erstreckt und durch Anschlussmittel (10, 11, 12, 13, 13') mit einer Spannungsquelle elektrisch verbindbar ist, wobei die Anschlussmittel einen bandförmigen ersten Sammelleiter (10) und einen bandförmigen zweiten Sammelleiter (11) umfassen, die jeweils über die volle Bandlänge hinweg mit der Heizschicht (6) in direktem Kontakt elektrisch leitend so verbunden sind, dass nach Anlegen einer Speisespannung ein Heizstrom über ein von der Heizschicht (6) gebildetes Heizfeld (14) fließt, wobei der erste Sammelleiter (10) mit mindestens einem ersten Flachbandleiter (12) und der zweite Sammelleiter (11) mit mindestens einem zweiten Flachbandleiter (13, 13') in direktem Kontakt elektrisch leitend verbunden sind, und wobei die Scheibe mindestens eine heizfeldfreie Scheibenzone (9) aufweist, in der mindestens ein elektrisches Zonenheizelement (15) angeordnet ist, das einen solchen ohmschen Widerstand hat, dass durch Anlegen der Speisespannung die heizfeldfreie Scheibenzone (9) beheizbar ist, **dadurch gekennzeichnet, dass** das Zonenheizelement (15) in elektrischer Parallelschaltung zum Heizfeld (14) mit dem mindestens einen ersten Flachbandleiter (12) und dem mindestens einen zweiten Flachbandleiter (13) in direktem Kontakt elektrisch leitend verbunden ist.

2. Scheibe (1) nach Anspruch 1, bei welcher ein oder mehrere Verbindungsabschnitte (23) zur elektrischen Verbindung des Zonenheizelements (15) mit dem ersten und/oder zweiten Flachbandleiter (12, 13, 13') zumindest bereichsweise in Berührungskontakt mit der Heizschicht (6) angeordnet sind, wobei die in Berührungskontakt mit der Heizschicht (6) angeordneten Bereiche der Verbindungsabschnitte (23) mit einer gegen die Umgebung elektrisch isolierenden Ummantelung versehen sind.

3. Scheibe (1) nach Anspruch 1, bei welcher ein oder mehrere Verbindungsabschnitte (23) zur elektrischen Verbindung des Zonenheizelements (15) mit dem ersten und/oder zweiten Flachbandleiter (12, 13, 13') zumindest bereichsweise in einer heizschichtfreien Randzone (7) der Scheibe angeordnet sind.

4. Scheibe (1) nach einem der Ansprüche 1 bis 3, welche als Verbundscheibe mit zwei durch eine thermoplastische Klebeschicht (4) miteinander verbundenen Einzelscheiben (2, 3) ausgeführt ist, wobei sich die Heizschicht (6) auf zumindest einer Oberfläche der Einzelscheiben und/oder auf einer Oberfläche eines zwischen den Einzelscheiben angeordneten Trägers befindet, wobei das wenigstens eine Zonenheizelement (15) zwischen den beiden Einzelscheiben angeordnet ist.

5. Scheibe (1) nach Anspruch 4, bei welcher das Zonenheizelement (15) zumindest abschnittsweise in die Klebeschicht (4) eingebettet ist.

6. Scheibe (1) nach einem der Ansprüche 1 bis 5, bei welcher das Zonenheizelement in Form eines Heizdrahts (15) oder einer Heizfolie ausgebildet ist.

7. Scheibe (1) nach Anspruch 6, bei welcher der Heizdraht (15) einen Durchmesser im Bereich von 35 bis 150 µm hat und/oder so ausgebildet ist, dass insbesondere bei einer Speisespannung im Bereich von 12 bis 24 Volt eine Enteisungsleistung im Bereich von 300 bis 1000 W/m² Scheibenfläche zur Verfügung gestellt werden kann.

8. Scheibe (1) nach einem der Ansprüche 6 oder 7, bei welcher der Heizdraht (15) zumindest einen gekrümmten Drahtabschnitt aufweist, wobei der gekrümmte Drahtabschnitt einen Krümmungsradius von mehr als 4 mm aufweist.

9. Scheibe (1) nach einem der Ansprüche 1 bis 8, welche als Fahrzeug-Windschutzscheibe ausgeführt ist, wobei die wenigstens eine heizfeldfreie Zone (9) als Ruhe- oder Parkstellung von zum Wischen der Scheibe vorgesehenen Scheibenwischern und/oder als Kommunikationsfenster (22) zur Kommunikation mit der äußeren Umgebung dient.

10. Scheibe (1) nach Anspruch 9, bei welcher das Zonenheizelement (15) in Überdeckung zu einem benachbart zu einem unteren Scheibenrand (5a') angeordneten Sammelleiter (11) angeordnet ist.

11. Verfahren zur Herstellung einer transparenten Scheibe (1) mit einer elektrischen Heizschicht (6), die sich zumindest über einen Teil der Scheibenfläche erstreckt und durch elektrische Anschlussmittel mit einer Spannungsquelle elektrisch verbindbar ist, wobei die Anschlussmittel einen bandförmigen ersten Sammelleiter (10) und einen bandförmigen zweiten Sammelleiter (11) umfassen, die jeweils über die vollständige Bandlänge hinweg mit der Heizschicht in direktem Kontakt elektrisch leitend so verbunden sind, dass nach Anlegen einer Speisespannung ein Heizstrom über ein von der Heizschicht gebildetes Heizfeld (14) fließt, wobei der erste Sammelleiter (10) mit mindestens einem ersten Flachbandleiter (12) und der zweite Sammelleiter (11) mit mindestens einem zweiten Flachbandleiter (13 13') in direktem Kontakt elektrisch leitend verbunden sind, und wobei die Scheibe mindestens eine heizfeldfreie Scheibenzone (9) aufweist, bei welchem
- mindestens ein elektrisches Zonenheizelement (15), das einen solchen ohmschen Widerstand hat, dass durch Anlegen der Speisespannung die heizfeldfreie Scheibenzone (9) heizbar ist, in der heizfeldfreien Scheibenzone (9) ausgebildet wird, und
- das Zonenheizelement (15) in elektrischer Parallelschaltung zum Heizfeld (14) mit dem mindestens einen ersten Flachbandleiter (12) und dem mindestens einen zweiten Flachbandleiter (13, 13') direkt elektrisch leitend verbunden wird.

12. Verfahren nach Anspruch 11, bei dem das Zonenheizelement (15) zumindest abschnittsweise in Berührungskontakt mit, aber elektrisch isoliert gegen die Heizschicht (6) angeordnet wird.

13. Verfahren nach Anspruch 11 oder 12, bei dem das Zonenheizelement (15) in Form eines einstückigen Heizdrahts verlegt wird.

14. Verwendung einer transparenten Scheibe (1) nach einem der Ansprüche 1 bis 10 als funktionales Einzelstück und als Einbauteil in Möbeln, Geräten und Gebäuden, sowie in Fortbewegungsmitteln zur Fortbewegung auf dem Lande, in der Luft oder zu Wasser, insbesondere in Kraftfahrzeugen beispielsweise als Windschutzscheibe, Heckscheibe, Seitenscheibe und/oder Glasdach.

## Claims

1. Transparent pane (1) with an electrical heating layer (6), which extends at least over a part of the pane surface and can be electrically connected via connection means (10, 11, 12, 13, 13') to a power source, wherein the connection means comprise a strip-shaped first bus bar (10) and a strip-shaped second bus bar (11), which, in each case, are electrically conductively connected directly to the heating layer (6) over the entire strip length such that after application of a supply voltage, a heating current flows over a heating field (14) formed by the heating layer (6), wherein the first bus bar (10) is electrically conductively connected in direct contact to at least one first flat ribbon cable (12) and the second bus bar (11) is electrically conductively connected in direct contact to at least one second flat ribbon cable (13, 13'), and wherein the pane has at least one heating-field-free pane zone (9), in which at least one electrical zone heating element (15) is disposed, which has an ohmic resistance such that the heating-field-free pane zone (9) is heatable by applying the supply voltage, **characterized in that** the zone heating element (15) is electrically conductively connected in direct contact to the at least one first flat ribbon cable (12) and to the at least one second flat ribbon cable (13) in an electrical parallel circuit with respect to the heating field (14).

2. Pane (1) according to claim 1, wherein one or a plurality of connection sections (23) are disposed, for the electrical connection of the zone heating element (15) to the first and/or second flat ribbon cable (12, 13, 13'), at least by regions in physical contact with the heating layer (6), wherein the regions of the connection sections (23) disposed in contact with the heating layer (6) are provided with an electrically insulating sheathing against the environment.

3. Pane (1) according to claim 1, wherein one or a plurality of connection sections (23) are disposed, for the electrical connection of the zone heating element (15) to the first and/or second flat ribbon cable (12, 13, 13'), at least by regions in a heating-layer-free edge zone (7) of the pane.

4. Pane (1) according to one of claims 1 through 3, which is implemented as a composite pane with two individual panes (2, 3) bonded to each other by a thermoplastic adhesive layer (4), wherein the heating layer (6) is situated on at least one surface of the individual panes and/or on a surface of a carrier arranged between the individual panes, wherein the at least one zone heating element (15) is disposed between the two individual panes.

5. Pane (1) according to claim 4, wherein the zone heating element (15) is embedded at least by sections in the adhesive layer (4).

6. Pane (1) according to one of claims 1 through 5, wherein the zone heating element is designed in the form of a heating wire (15) or a heating foil.

7. Pane (1) according to claim 6, wherein the heating wire (15) has a diameter in the range from 35 to 150 µm and/or is designed such that, in particular, with a supply voltage in the range from 12 to 24 volts, a de-icing power in the range from 300 to 1000 W/m² of pane surface can be made available.

8. Pane (1) according to one of claims 6 or 7, wherein the heating wire (15) has at least one curved wire section, wherein the curved wire section has a radius of curvature of more than 4 mm.

9. Pane (1) according to one of claims 1 through 8, which is implemented as a motor vehicle windshield, wherein the at least one heating-field-free zone (9) serves as a resting or parked position of the windshield wipers provided to wipe the pane and/or as a communication window (22) for communication with the external environment.

10. Pane (1) according to claim 9, wherein the zone heating element (15) is disposed overlapping a bus bar (11) disposed adjacent a lower edge of the pane (5a').

11. Method for producing a transparent pane (1) with an electrical heating layer (6), which extends at least over a part of the pane surface and can be electrically connected via connection means to a power source, wherein the connection means comprise a strip-shaped first bus bar (10) and a strip-shaped second bus bar (11), which, in each case, are electrically conductively connected in direct contact to the heating layer over the entire strip length such that after application of a supply voltage, a heating current flows over a heating field (14) formed by the heating layer, wherein the first bus bar (10) is electrically conductively connected in direct contact to at least one first flat ribbon cable (12) and the second bus bar (11) is electrically conductively connected in direct contact to at least one second flat ribbon cable (13 13'), and wherein the pane has at least one heating-field-free pane zone (9), in which
- at least one electrical zone heating element (15), which has an ohmic resistance such that the heating-field-free pane zone (9) is heatable by applying the supply voltage, is implemented in the heating-field-free pane zone (9), and
- the zone heating element (15) is electrically conductively connected directly to the at least one first flat ribbon cable (12) and to the at least one second flat ribbon cable (13, 13') in an electrical parallel circuit with respect to the heating field (14).

12. Method according to claim 11, wherein the zone heating element (15) is disposed at least by sections in physical contact with, but electrically insulated against, the heating layer (6).

13. Method according to claim 11 or 12, wherein the zone heating element (15) is laid in the form of a one-piece heating wire.

14. Use of a transparent pane (1) according to one of claims 1 through 10 as a functional individual piece and as a built-in part in furniture, devices, and buildings, as well as in means of transportation on land, in the air, or on water, in particular in motor vehicles, for example, as a windshield, rear window, side window, and/or glass roof.

## Revendications

1. Vitre transparente (1) avec une couche électrique chauffante (6), s'étendant au moins sur une partie de la surface de la vitre et pouvant être connectée électriquement avec une source de tension électrique, par des moyens de connexion (10, 11, 12, 13, 13') où les moyens de connexion comprennent un premier conducteur collectif (10) en forme d'une bande et un deuxième conducteur collectif (11) en forme d'une bande, qui sont respectivement raccordés sur toute la longueur de la bande avec la couche chauffante (6) en contact direct de manière électriquement conductrice, de telle manière qu'après la mise sous tension, un courant de chauffage passe par une zone chauffante (14) formée par la couche chauffante (6), où le premier conducteur collectif (10) avec au moins un premier conducteur plat (12) et le deuxième conducteur collectif (11) avec au moins un deuxième conducteur plat (13, 13') sont raccordés en contact direct de manière électriquement conductrice, et où la vitre présente au moins une zone dépourvue de panneau chauffant (9), dans laquelle au moins un élément chauffant d'une zone (15) est disposé, ayant une telle résistance ohmique, qu'à la mise sous tension, la zone de la vitre dépourvue de panneau chauffant (9) peut être chauffée, **caractérisée en ce qu'**un élément chauffant d'une zone (15) est raccordé de manière électriquement conductrice en contact direct en parallèle à la zone chauffante (14) avec ledit au moins un premier conducteur plat (12) et ledit au moins un deuxième conducteur plat (13).

2. Vitre (1) selon la revendication 1, où une ou plusieurs sections de raccordement (23) pour le raccordement électrique de l'élément de chauffage de zone (15) avec le premier et/ou le deuxième conducteur plat (12, 13, 13') sont disposées au moins par zones en contact avec la couche de chauffage (6), où les zones des sections de raccordement (23) disposées en contact avec la couche de chauffage (6) sont pourvues d'une gaine électriquement isolante contre l'environnement.

3. Vitre (1) selon la revendication 1, où une ou plusieurs sections de raccordement (23) pour le raccordement électrique de l'élément de chauffage de zone (15) avec le premier et/ou le deuxième conducteur plat (12, 13, 13') sont disposées au moins par zones dans une zone périphérique (7) de la vitre dépourvue de couche chauffante.

4. Vitre (1) selon l'une des revendications 1 à 3, qui est exécutée comme verre stratifiée avec deux vitres individuelles (2, 3) reliées par une couche adhésive thermoplastique (4), où la couche de chauffage (6) se trouve sur au moins une surface des vitres individuelles et/ou sur une surface d'un support disposé entre les vitres individuelles, où ledit au moins un élément chauffant d'une zone (15) est disposé entre les deux vitres individuelles.

5. Vitre (1) selon la revendication 4, où l'élément chauffant d'une zone (15) est intégré au moins par sections dans la couche adhésive (4).

6. Vitre (1) selon l'une des revendications 1 à 5, où l'élément chauffant d'une zone est formé comme fil chauffant (15) ou feuille chauffante.

7. Vitre (1) selon la revendication 6, où le fil chauffant (15) a un diamètre compris entre 35 à 150 µm et/ou est conçu de telle manière qu'en particulier, à une tension comprise entre 12 et 24 volts une performance de dégivrage comprise entre 300 et 1000 W/mf surface de la vitre peut être assurée.

8. Vitre (1) selon l'une des revendications 6 ou 7, où le fil chauffant (15) présente au moins une section de fil courbé, où la partie courbée du fil présente un rayon de courbure supérieur à 4 mm.

9. Vitre (1) selon l'une des revendications 1 à 8, qui est exécuté comme pare-brise d'un véhicule, où ladite au moins une zone dépourvue de panneau chauffant (9) sert de position de repos ou de rangement des essuie-glaces prévus pour essuyer la vitre et/ou de fenêtre de communication (22) pour communiquer avec l'environnement extérieur.

10. Vitre (1) selon la revendication 9, où l'élément chauffant d'une zone (15) est disposé en recouvrement d'un conducteur collectif (11) avoisinant un bord inférieur de la vitre (5a').

11. Procédé pour la fabrication d'une vitre transparente (1) avec une couche de chauffage électrique (6) s'étendant au moins sur une partie de la surface de la vitre et pouvant être connectée électriquement avec une source de tension électrique par des moyens de connexion, où les moyens de connexion comprennent un premier conducteur collectif (10) en forme d'une bande et un deuxième conducteur collectif (11) en forme d'une bande, qui sont respectivement raccordés sur toute la longueur de la bande avec la couche chauffante en contact direct de manière électriquement conductrice, de telle manière qu'après la mise sous tension, un courant de chauffage passe par une zone chauffante (14) formée par la couche chauffante, où le premier conducteur collectif (10) avec au moins un premier conducteur plat (12) et le deuxième conducteur collectif (11) avec au moins un deuxième conducteur plat (13, 13') sont raccordés en contact direct de manière électriquement conductrice, et où la vitre présente au moins une zone dépourvue de panneau chauffant (9), où
- au moins un élément chauffant d'une zone (15) est formé dans la zone de la vitre dépourvue de panneau chauffant, ayant une telle résistance ohmique, qu'à la mise sous tension, la zone de la vitre dépourvue de panneau chauffant (9) peut être chauffée, et
- l'élément chauffant d'une zone (15) raccordé électriquement en parallèle à la zone chauffante (14) avec ledit au moins un premier connecteur plat (12) et ledit au moins un deuxième conducteur plat (13, 13').

12. Procédé selon la réclamation 11, où l'élément chauffant d'une zone (15) est disposé au moins sur certaines sections en contact avec la couche de chauffage (6), mais isolée électriquement.

13. Procédé selon la revendication 11 ou 12, où l'élément chauffant d'une zone (15) prend la forme d'un fil chauffant unique.

14. Utilisation d'une vitre transparente (1) selon l'une des revendications 1 à 10 comme élément fonctionnel et accessoire dans le mobilier, des appareils et des bâtiments, ainsi que dans des moyens de locomotion sur la terre, dans l'air ou sur l'eau, en particulier dans les véhicules automobiles, par exemple, comme pare-brise, lunette arrière, vitre latérale et/ou toit en verre.
